# EUROPÄISCHE PATENTSCHRIFT

(11) **EP 1 036 971 B1**
(45) Veröffentlichungstag und Bekanntmachung des Hinweises auf die Patenterteilung: **12.12.2001**
(21) Anmeldenummer: 00100241.9
(22) Anmeldetag: 18.01.2000
(51) Int. Cl.: F16L 25/00, H02G 3/06, F16L 37/12

(54) **Wellrohrverbindung mit Sperrabschnitt**
Corrugated pipe connector with a blocking element
Raccord de tuyau ondulé avec un élément de blocage

(30) Priorität: 16.03.1999 DE 19911724
(43) Veröffentlichungstag der Anmeldung: 20.09.2000
(73) Patentinhaber: PMA AG, 8610 Uster (CH)
(72) Erfinder: Schwarz, Ernst, 8604 Voketswil (CH); Hüppi, Roger, 8640 Rapperswil (CH)
(74) Vertreter: Schwabe - Sandmair - Marx

(56) Entgegenhaltungen:
- WO-A-99/01692
- DE-A- 3 047 867
- US-A- 4 368 904
- US-A- 4 723 796
- US-A- 4 919 462
- US-A- 5 782 502

## Beschreibung

Die vorliegende Erfindung richtet sich auf eine Wellrohrverbindung zur Festlegung eines Wellrohrs mit einem Sperrabschnitt, der wenigstens eine Lippe an einer dem Wellrohr zugewandten Seite des Sperrabschnitts aufweist, wobei im geschlossenen Zustand der Wellrohrverbindung dem Sperrabschnitt gegenüber ein Verriegelungsabschnitt liegt.

Derartige Wellrohrverbindungen sind im Stand der Technik hinreichend bekannt und werden auch von der Anmelderin selbst hergestellt und vertrieben. Derartige Wellrohrverbindungen sind häufig als Steckverbindungen ausgebildet, wobei der Sperrabschnitt meist C-förmig ausgebildet ist. Die Schenkel des C-förmigen Sperrabschnittes werden in einen Verriegelungsabschnitt eingesteckt und mit diesem verrastet, wobei die Lippe zwischen die Wellenberge eines Wellrohres eingreift und das Wellrohr damit in einer derartigen Wellrohrverbindung festsetzt.

Weitere bekannte Wellrohrverbindungen weisen ein über ein Scharnier oder einen Verbindungssteg mit dem Verriegelungsabschnitt verbundenen Sperrabschnitt auf. Bei diesen Wellrohrverbindungen greifen ebenfalls mehrere Lippen in die Wellungen eines Wellrohres ein.

Wie bereits angedeutet, sind bei bekannten Wellrohrverbindungen immer jeweils mehrere, das heißt wenigstens zwei oder drei Lippen erforderlich, die in Wellentäler eines festzulegenden Wellrohres eingreifen müssen. Wenn beispielsweise das Rohr im Bereich der Wellrohrverbindung gebogen wird oder wenn an dem Rohr gezogen wird, sind im Stand der Technik wenigstens zwei oder drei Lippen für eine entsprechende Wellrohrverbindung erforderlich, um diese ausreichend widerstandsfähig mit einem Wellrohr mit ganz bestimmten Spezifikationen dauerhaft und soweit als möglich ausreißfest zu verbinden. Dies führt dazu, daß bei Wellrohren nur jeweils ein einziges Wellrohrprofil mit einer bestimmten Wellrohrverbindung ausreichend fest verbunden werden kann.

Die US-A-4,368,904 offenbart eine Wellrohrverbindung mit Sperrabschnitt gemäß dem Oberbegriff des Patentanspruchs 1, wie sie voranstehend bereits prinzipiell erörtert worden ist. Ein Sperrabschnitt umgreift dabei über 180° ein Wellrohr, das über die Wellrohrverbindung festzulegen ist. Am unteren Ende von Schenkeln des Sperrabschnittes sind Rastabschnitte vorgesehen, die mit dem Verriegelungsabschnitt verrastbar sind.

Die US-A-4,723,796 offenbart eine Wellrohrverbindung, bei der ein Sperrabschnitt gleichfalls über zwei Schenkel zwischen die Wellungen eines Wellrohres einzugreifen vermag. Die Schenkel sollen den Sperrabschnitt an dem Wellrohr festlegen, wobei der Sperrabschnitt in einen Abschnitt einzugreifen vermag, der zylindersymmetrisch ausgebildet ist und der ein Ende des festzulegenden Wellrohres vollumfänglich aber in Längserstreckungsrichtung des Wellrohres bereichsweise umgibt. Während der Sperrabschnitt mit den Schenkeln den Sperrabschnitt selbst am Wellrohr in Radialrichtung festlegt, ist der Sperrabschnitt selber in Axialrichtung über stegartige Bereiche an dem zylindrischen Körper der Wellrohrverbindung abgesichert. Ein Sperreingriff zwischen dem Sperrabschnitt und dem zylindrischen Abschnitt der bekannten Wellrohrverbindung ist nicht vorgesehen.

Es ist folglich die Aufgabe gemäß der vorliegenden Erfindung, einerseits eine vielseitiger einsetzbare Wellrohrverbindung zu schaffen, die andererseits insbesondere noch mit einer gesteigerten Haltekraft für das Wellrohr ausgestattet ist.

Die zitierte Aufgabe wird wenigstens überwiegend durch eine Wellrohrverbindung mit den im Patentanspruch 1 aufgeführten Merkmalen gelöst.

Äußerst zweckmäßige und vorteilhafte Ausführungsformen gehen aus den Unteransprüchen hervor.

Die gemäß der Erfindung zu erzielenden Vorteile beruhen darauf, daß sich die Lippe am Sperrabschnitt über mehr als 180° an Wellrohrumfang zwischen zwei benachbarte Wellrohrwellungen erstreckt, wobei die Lippenabschnitte einander in Bezug auf eine Symmetrieebene näher sind als die am weitesten voneinander entfernten inneren Konturen der Lippe, die einander gegenüber liegen.

Das heißt, insbesondere im unteren Endbereich von Schenkeln des Sperrabschnittes sind die in Bezug auf die Symmetrieebene einander gegenüberliegenden Lippenabschnitte einander näher als in den Bereichen der Lippe, die der Längsmittelachse eines festgelegten Wellrohres gegenüber liegen.

Dabei kann der Innendurchmesser der Lippe gleichmäßig gerundet ausgebildet sein oder aber auch linear vorspringen oder dergleichen.

Hierdurch ist es möglich, daß eine optimierte Kraftverteilung auf das Lippenprofil, insbesondere an den Endbereichen der Lippen, ermöglicht werden kann. Eine erhöhte Auflagepressung gerade in einem Bereich, in dem üblicherweise eine derartige Wellrohrverbindung zusammengesteckt wird, kann ebenfalls gewährleistet werden.

Überraschenderweise kann mit dieser erfindungsgemäßen Ausgestaltung bei Verwendung lediglich einer einzelnen Lippe eine Steigerung der Ausreißkraft von mehr als 30% erzielt werden.

Diese überraschenden Ergebnisse sind darüber hinaus noch mit dem Umstand in vorteilhafter Weise gepaart, daß verschiedene Profile, insbesondere Fein- und Rohprofile, eines Wellrohres in einer erfindungsgemäß ausgebildeten Wellrohrverbindung festgelegt werden können.

Natürlich können unter Aufgabe dieses letzteren Vorteils auch mehrere Lippen bei einer Wellrohrverbindung zum Einsatz kommen, beispielsweise, um eine noch höhere Haltekraft bereitstellen zu können.

Vorteilhafterweise erstreckt sich die Lippe symmetrisch zu der Symmetrieebene bzw. zu einer in Längsrichtung eines festgelegten Wellrohres erstreckten Zylinderachse. Dabei erstreckt sich die Lippe wenigstens auf einer Seite um mehr als 90° in Umfangsrichtung des Wellrohres. Wesentlich ist hierbei, daß sich die Lippe im unteren Bereich, das heißt in dem Bereich, in dem der Sperrabschnitt endet, nicht linear, das heißt tangential von dem Rohrdurchmesser weg erstreckt, sondern dem Rohrdurchmesser wenigstens einen kurzen Bereich, das heißt in dem Bereich, in dem sich die Lippe um mehr als 90° in Umfangsrichtung des Wellrohrs erstreckt, folgt oder sich diesem wenigstens teilweise annähert.

Dabei ist es vorteilhaft, wenn sich die Lippe in Umfangsrichtung des Wellrohres über mehr als 190°, insbesondere mehr als 200°, erstreckt, beispielsweise über 210°, 220° oder mehr.

Die Lippe sollte sich in einem Zusatzbereich radial nach innen weiter erstrecken, der jenseits der 180°-Umfangserstreckung liegt, als in dem Bereich, der zu der 180°-Umfangserstreckung gehört. Die Lippe sollte sich dabei, wie oben angedeutet, in dem Zusatzbereich dem Außenumfang des Wellrohres in einem Wellental wenigstens in etwa annähern bzw. folgen. Die Lippe kann dabei auch mit einem geringeren Durchmesser bzw. Teilkreisdurchmesser ausgebildet sein als das zugehörige Wellrohr bzw. das zugehörige Wellrohr innerhalb eines Wellentales, um eine Verpressung zwischen dem Außenumfang des Wellrohres und der Lippe des Sperrabschnittes bereitstellen zu können.

Natürlich kann sich die Rippe radial nach innen auch unterschiedlich hoch erstrecken, das heißt, daß die Lippe selbst radial nach innen ein wellenförmiges Profil aufweisen kann, gezackt oder sonstwie ausgebildet sein kann. Günstig ist jedoch ein gerades, kontinuierliches Lippenprofil, das wenigstens angenähert zu dem Außendurchmesser eines Wellrohres im Wellental paßt.

Vorteilhafterweise ist der innere Teilradius der Lippe wenigstens im wesentlichen überall gleich, wobei die Kontur des Sperrabschnitts am Innenumfang des Sperrabschnittes, an den die Lippe anschließt, wenigstens in etwa oval sein kann. Dies hat zur Folge, daß der erforderliche Spielraum geschaffen werden kann, um die Lippe mit unterschiedlichen Abmessungen versehen zu können.

Zwar ist es auch möglich, den Sperrabschnitt und die Lippe asymmetrisch auszubilden, jedoch ist es zur einfacheren Handhabung sehr sinnvoll, wenn der Sperrabschnitt um eine Ebene symmetrisch ausgebildet ist und die höher werdende Lippe beidseits der Ebene symmetrisch in ihrer radialen Höhe variiert wird.

Dabei ist es besonders wesentlich, daß die Höhe ausgehend von dem Schnittpunkt der Symmetrieebene des Sperrabschnitts mit der Lippe, die ebenfalls hierzu symmetrisch vorgesehen ist, zunimmt.

Vorteilhafterweise weist das Sperrelement zwei Schenkel mit einem Verbindungsabschnitt auf, wobei die Schenkel zusammen mit dem Verbindungsabschnitt als Federelement dienen, wobei da Sperrelement mittels wenigstens eines Rasterabschnittes mit dem Verriegelungsabschnitt verrastbar ist.

Der Verriegelungsabschnitt kann selbst ebenfalls mit wenigstens einer Lippe versehen sein, die zu der Lippe am Sperrelement korrespondiert bzw. als Fortsetzung dieser Lippe ausgebildet ist. Auch ist es möglich, im Verriegelungsabschnitt eine oder mehrere Lippen vorzusehen, wobei diese Lippe oder Lippen zu der Lippe im Sperrabschnitt um die axiale Erstreckung wenigstens einer Wellrohrung versetzt sein können.

Der Sperrabschnitt kann über einen Verbindungsabschnitt mit dem Verriegelungsabschnitt zusammengesetzt sein. Dieser Verbindungsabschnitt kann beispielsweise in der form eines Steges oder eines Filmscharnieres oder dergleichen realisiert sein. Auf diese Weise kann die erfindungsgemäße Wellrohrverbindung eventuell auch als über eine Schwenkbewegung zusammensetzbare Wellrohrverbindung ausgebildet sein, wobei gemäß der Erfindung jedoch ein besonderes Augenmerk auf eine zweiteilige Wellrohrverbindung mit separatem Sperrabschnitt und separatem Verriegelungsabschnitt gerichtet wird, da die gemäß der Erfindung zu erzielenden Vorteile insbesondere hier zur Geltung kommen. Es ist nämlich festzuhalten, daß Wellrohrverbindungen mit über Filmscharniere verbundenen Bestandteilen einen Schwachpunkt besonders im Bereich des Filmscharnieres haben, der bei einer zweiteiligen Wellrohrverbindung der erfindungsgemäßen Art nicht vorhanden ist. Sind also besonders ausreißfeste Wellrohrverbindungen nötig, wird man sich einer zweiteiligen Wellrohrverbindung zuwenden müssen.

In dem Fall einer zweiteiligen Wellrohrverbindung ist es zweckmäßig, wenn die Rastabschnitte an jedem der Schenkel vorgesehen sind, die zu dem Sperrabschnitt gehörig sind. Der Verriegelungsabschnitt weist dann dementsprechende konträre Ausformungen auf, die zu den Rastabschnitten an dem Sperrabschnitt korrespondieren.

Wird eine Wellrohrverbindung eingesetzt, bei der der Sperrabschnitt und der Verriegelungsabschnitt verbunden sind, kann auf einen Rastabschnitt verzichtet werden, da die gegenüberliegende Seite über das Filmscharnier, den Verbindungssteg oder dergleichen gehalten wird. Andererseits ist es auch möglich, trotz einer prinzipiell zweiteiligen Ausführungsform einer Wellrohrverbindung mit Merkmalen gemäß der Erfindung, einen Verbindungsabschnitt, das heißt beispielsweise einen längeren Verbindungssteg, vorzusehen, beispielsweise, um die beiden Bestandteile unverlierbar zusammenhalten zu können.

Wie bereits angedeutet, ist es besonders vorteilhaft, in dem Übergangs- bzw. Überschneidungsbereich zwischen dem Sperrabschnitt und dem Verriegelungsabschnitt, das heißt dort, wo die Rastabschnitte in den Verriegelungsabschnitt eingreifen, den Sperrabschnitt über dessen Lippe an dem Wellrohr anliegen zu lassen, gegebenenfalls unter Spannung. Dabei weist dann das Wellrohr einen etwas geringeren oder gleichen Außendurchmesser auf als der Innendurchmesser der Lippe in diesem Bereich.

Am Endbereich der Lippe ist ein Federabschnitt vorzusehen, so daß die Lippe beim Aufstecken des Sperrabschnittes auf ein Wellrohrende federnd ausweichen kann. Zu diesem Zweck kann an den Endabschnitten der Lippe jeweils eine Ausnehmung vorgesehen sein, so daß in Verbindung mit der Federeigenschaft des Materials, aus dem die Wellrohrverbindung üblicherweise hergestellt wird, nämlich Kunststoff, die Lippe dem Rohr ausweichen kann, wobei gleichzeitig auch die Federeigenschaft des Wellrohres mit ausgenutzt werden kann. Da jedoch nicht nur Kunststoffwellrohre, sondern auch Metallwellrohre mit der erfindungsgemäßen Wellrohrverbindung festgelegt werden können, kann es sinnvoll sein, die Federeigenschaft der Endabschnitte der Lippe so zu arrangieren, daß eine elastische Eigenschaft des Wellrohres nicht erforderlich ist.

Es ist selbstverständlich, daß die Wellrohrverbindung gemäß der vorliegenden Erfindung sowohl als Anschlußabschnitt, beispielsweise an ein Maschinengehäuse, ausgebildet sein kann, das heißt, daß an dem Verriegelungsabschnitt ein Schraubgewinde, ein Bajonettanschluß oder dergleichen anschließt. Auch als Eckanschluß, Verbindung zwischen zwei Wellrohrenden, als Verzweigungsabschnitt oder dergleichen kann die erfindungsgemäße Wellrohrverbindung zum Einsatz gelangen.

Nachfolgend wird die vorliegende Erfindung anhand der beigefügten Figuren unter Bezugnahme auf eine besonders Ausführungsform mit Merkmalen gemäß der Erfindung näher beschrieben. Dabei werden weitere Merkmale, Vorteile und Zielsetzungen gemäß der Erfindung offenbart. In den Darstellungen zeigen:
- Fig. 1: eine Seitenansicht eines Sperrabschnittes mit Merkmalen gemäß der Erfindung;
- Fig. 2: eine Draufsicht auf den Sperrabschnitt gemäß Fig. 1; und
- Fig. 3: eine Außenansicht des Sperrabschnitts gemäß den Fig. und 2.

In den Figuren sind gleiche oder wenigstens funktionsgleiche Bestandteile mit den gleichen Bezugszeichen benannt.

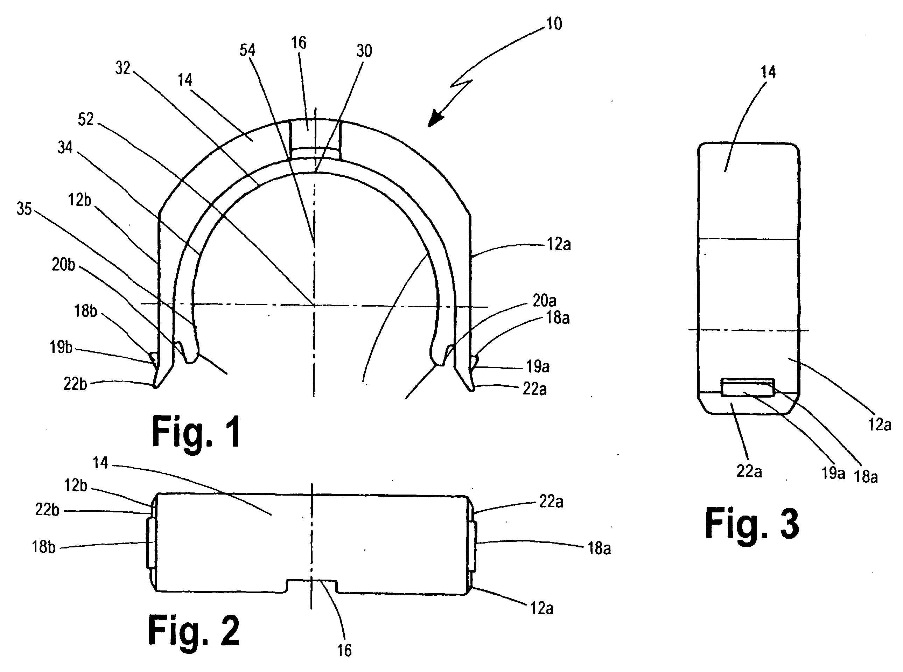

Ein Sperrabschnitt 10 gemäß Fig. 1 weist zwei Schenkel 12a, 12b auf, die über einen Verbindungsabschnitt 14 miteinander verbunden sind. Am Innenumfang des aus dem Verbindungsabschnitt 14 und dem Schenkel 12a, 12b zusammengesetzten Körpers ergibt sich vorteilhafterweise eine runde bzw. ovale Kontur, aus der die Schenkel 12a, 12b tangential herauslaufen. Diese Kontur läßt sich dann am besten auf ein Wellrohr (nicht dargestellt) radial zu dessen Zylinderachse aufstecken. Dies gilt für runde Wellrohre. Entsprechend ist die Form für anders geartete Wellrohre, beispielsweise Oval-Wellrohre, eckige Wellrohre bzw. andere Formen von Wellrohren, an diese anzupassen.

An den Schenkeln 12a, 12b sind jeweilige Rastabschnitte 18a, 18b vorgesehen, über die der Sperrabschnitt 10 an einem Verriegelungsabschnitt (nicht dargestellt) festgelegt werden kann. Die Verriegelungsabschnitte 18a, 18b weisen Steuerführungen 19a, 19b auf, die dazu führen, daß die Schenkel 12a, 12b beim Einstecken des Sperrabschnittes in den Verriegelungsabschnitt nach innen ausweichen, so daß dann die Rastabschnitte 18a, 18b mit der Gegenform bzw. den Rastschultern am Verriegelungsabschnitt in Wirkverbindung treten können. Die Endabschnitte 22a, 22b der Schenkel 12a, 12b des Sperrabschnitts 10 können so ausgebildet sein, daß sie federnd in eine korrespondierende Ausformung am Verriegelungsabschnitt eingreifen, um auf diese Weise eine zusätzliche Haltekraft zu vermitteln.

Eine Lippe 30, 32, 34, 35, 36 erstreckt sich entlang des Innenbereichs des Sperrabschnitts 10. Der Sperrabschnitt insgesamt ist symmetrisch zu einer Symmetrieebene 54, das heißt der Schnittpunkt zwischen der Symmetrieebene 54 und dem Bereich 30 der Lippe ist der "Nullpunkt" der Lippe, von dem ausgehend sich die Abmessungen der Lippe symmetrisch bzw. gleichmäßig verändern bzw. deren Höhe gleichmäßig zu den Endbereichen 35 der Lippe zunimmt.

Die Haupterstreckungsachse eines Wellrohres erstreckt sich durch einen virtuellen Mittelpunkt 52, der Mittelpunkt des durch den Innenumfang 36 der Lippe gegebenen Kreises ergibt. Der Kreis 36, das heißt der Innenumfang der Lippe, korrespondiert zu einem Rohrdurchmesser in einem Wellental.

Ausgehend von dem Nullpunkt 30 der Lippe, nimmt die Höhe der Lippe über die Bereiche 32, 34 und 35, ausgehend von dem Körper des Sperrabschnitts 10, das heißt dem Verbindungsabschnitt 14 und den Schenkeln 12a, 12b, zu.

Dabei kann die Lippe so ausgebildet sein, daß sie gleichmäßig in Wellungen eines Wellrohres eingreift, jedoch kann dies auch unter Spannung geschehen, das heißt im Bereich 30 der Lippe ist die Höhe der Lippe geringer als die Tiefe der Wellung eines Wellrohres, während im Bereich 35 der Lippe die Höhe der Lippe größer als die Tiefe der Wellung eines Wellrohres ist. Auf diese Weise kann das Wellrohr gegenüber der Lippe bzw. gegenüber dem Sperrabschnitt 10 verspannt werden. Dies kann jedoch zu Reibung und zu Abnutzungserscheinungen führen.

Wie zu erkennen ist, ist die Lippe derart ausgebildet, daß sie über 180°, das heißt über den virtuellen Mittelpunkt 52, an der Wandung eines Wellrohres in einem Wellental anliegt. Wird das Rohr beispielsweise gebogen, ergibt sich hierdurch automatisch eine erhöhte Auflagepressung im Verriegelungsbereich der Sperr, so daß eine erhöhte Ausreißkraft erforderlich wäre, um das Wellrohr zu entfernen. Auch eine zusätzliche Verstemmung der Verankerung der Schenkel des Sperrabschnitts 10 innerhalb des Verriegelungsabschnitts (nicht gezeigt) ist hiermit verbunden. Die Ausreißkraft kann durch die dargestellte ovale Form der Lippe bzw. ovale Höhenveränderung der Lippe um 30% und mehr gesteigert werden. Dieses sehr vorteilhafte und überraschende Ergebnis läßt sich erzielen, obwohl statt, wie sonst üblich, zwei bis drei Lippen nur eine einzige Lippe zum Einsatz kommen. Die Verwendung nur einer einzigen Lippe garantiert wiederum, daß unterschiedliche Rohrprofile, das heißt Fein- und Rohprofile, über die erfindungsgemäße Wellrohrverbindung festgelegt werden können.

Das Lippenprofil, das gemäß der vorliegenden Erfindung ausgebildet ist, garantiert eine optimale Kraftverteilung auch in extremen Situationen, das heißt, wenn das Rohr im Bereich der erfindungsgemäßen Wellrohrverbindung stark gebogen wird, und sorgt damit für eine noch sicherere Festlegung des Rohres.

An den Endabschnitten 35 der Lippe sind Ausnehmungen vorgesehen, die dazu führen, daß die Endabschnitte der Lippe mit Federeigenschaften ausgestattet sind. Die Ausnehmungen 20a, 20b können dabei so dimensioniert sein, daß die Endbereiche der Lippe über eine angemessene Strecke radikal auswärts ausweichen können, wenn ein Wellrohr festzulegen ist, das heißt, wenn der Sperrabschnitt auf ein Wellrohrende aufgesteckt wird.

Die Fig. 2 zeigt den Sperrabschnitt 10 gemäß Fig. 1 von oben. Der gerundete Verriegelungsabschnitt 14 geht in die großen gerade ausgebildeten Schenkel 12a, 12b über. Von den Schenkeln 12a, 12b erstrecken sich die Rastabschnitte 18a, 18b unterhalb denen die Federbereiche 22a, 22b erkennbar sind.

Die Fig. 3 zeigt den erfindungsgemäß ausgebildeten Sperrabschnitt von außen, wobei lediglich die bereits beschriebenen Bestandteile zu erkennen sind. Zusätzlich zu den Abschnitten gemäß Fig. 2 ist der Führungsbereich 19a zu erkennen, über den die Schenkel 12a, 12b dazu veranlaßt werden, einer entsprechenden konträren Profilierung am Verriegelungsabschnitt auszuweichen, so daß dann die Schenkel 12a, 12b in eine Rastverbindung über die Rasteinrichtungen 18a, 18b treten können.

## Patentansprüche

1. Wellrohrverbindung zur Festlegung eines Wellrohres, mit einem Sperrabschnitt (10) mit wenigstens einer Lippe (30, 32, 34, 35, 36) an einer dem Wellrohr zugewandten Seite des Sperrabschnitts, wobei im geschlossenen Zustand der Wellrohrverbindung dem Sperrabschnitt ein Verriegelungsabschnitt gegenüberliegt,
**dadurch gekennzeichnet, daß** sich die Lippe (30, 32, 34, 35, 36) am Sperrabschnitt über mehr als 180° am Wellrohrumfang zwischen zwei benachbarte Wellrohrwellungen erstreckt, wobei die Lippenendabschnitte einander in bezug auf eine Symmetrieachse (54) näher sind als die am weitestens voneinander entfernten inneren Konturen der Lippe, die einander gegenüber liegen.

2. Wellrohrverbindung nach Anspruch 1, **dadurch gekennzeichnet, daß** sich die Lippe symmetrich zu einer in Längsrichtung eines festgelegten Wellrohrs erstreckten Zylinderachse erstreckt, wobei sich die Lippe wenigstens auf einer Seite um mehr als 90° in Umfangsrichtung des Wellrohres erstreckt.

3. Wellrohrverbindung nach einem der Ansprüche 1 oder 2, **dadurch gekennzeichnet, daß** sich die Lippe in Umfangsrichtung des Wellrohres über mehr als 190°, insbesondere mehr als 200°, erstreckt, beispielsweise über 210°, 220° oder mehr.

4. Wellrohrverbindung nach einem der Ansprüche 1 bis 3, **dadurch gekennzeichnet, daß** sich die Lippe wenigstens in einem Zusatzbereich radial nicht innen weiter erstreckt, der jenseits der 180°-Umfangserstreckung liegt, als in dem Bereich der 180°-Umfangserstreckung.

5. Wellrohrverbindung nach Anspruch 4, **dadurch gekennzeichnet, daß** die Lippe (30, 32, 34, 35, 36) in dem Zusatzbereich (35) dem Außenumfang des Wellrohres in einem Wellental wenigstens in etwa folgt bzw. dazu korrespondiert oder kleiner als dieser ist.

6. Wellrohrverbindung nach einem der Ansprüche 1 bis 4, **dadurch gekennzeichnet, daß** sich die Lippe radial nach innen unterschiedlich hoch erstreckt.

7. Wellrohrverbindung nach einem der Ansprüche 1 bis 6, **dadurch gekennzeichnet, daß** der innere Teilradius bzw. Radius der Lippe wenigstens im wesentlichen überall gleich ist.

8. Wellrohrverbindung nach Anspruch 7, **dadurch gekennzeichnet, daß** die Kontur des Sperrabschnitts (10) am Innenumfang wenigstens in etwa oval ist, so daß sich insbesondere eine ovale Außenform der Lippe in Angrenzung zu einem Körper (12a, 12b, 14) des Sperrabschnitts ergibt.

9. Wellrohrverbindung nach einem der Ansprüche 1 bis 8, **dadurch gekennzeichnet, daß** der Sperrabschnitt um eine Ebene (54) symmetrisch ausgebildet ist und die höher werdende Lippe beidseits der Ebene symmetrisch in ihrer radialen Höhe variiert ist.

10. Wellrohrverbindung nach Anspruch 9, **dadurch gekennzeichnet, daß** die Höhe ausgehend von dem Schnittpunkt der Symmetrieebene mit der Lippe zunimmt.

11. Wellrohrverbindung nach einem der Ansprüche 1 bis 10, **dadurch gekennzeichnet, daß** das Sperrelement (10) zwei Schenkel (12a, 12b) mit einem Verbindungsabschnitt (14) aufweist, die zusammen den Körper des Sperrelements bilden.

12. Wellrohrverbindung nach einem der Ansprüche 1 bis 11, **dadurch gekennzeichnet, daß** der Verriegelungsabschnitt wenigstens eine Lippe hat, die zu der Lippe (30, 32, 34, 35, 36) am Sperrelement korrespondiert bzw. zu dieser um die axiale Erstreckung wenigstens einer Wellrohrwellung versetzt ist.

13. Wellrohrverbindung nach einem der Ansprüche 1 bis 10, **dadurch gekennzeichnet, daß** das Sperrelement mittels wenigstens eines Rastabschnitts (18a, 18b) mit dem Verriegelungsabschnitt verrastbar ist, wobei der Rastabschnitt (18a, 18b) an einem Schenkel (12a, 12b) bzw. an jedem der Schenkel vorgesehen ist.

14. Wellrohrverbindung nach einem der Ansprüche 1 bis 13, **dadurch gekennzeichnet, daß** der Sperrabschnitt (10) über einen Verbindungsabschnitt, ein Filmscharnier, einen Verbindungssteg oder dergleichen am Verriegelungsabschnitt gehalten ist.

15. Wellrohrverbindung nach einem der Ansprüche 1 bis 14, **dadurch gekennzeichnet, daß** in dem Übergangs- bzw. Überschneidungsbereich zwischen dem Sperrabschnitt und dem Verriegelungsabschnitt der Sperrabschnitt (10) über dessen Lippe (30, 32, 34, 35, 36) am Wellrohr aufliegt bzw. anliegt.

16. Wellrohrverbindung nach einem der Ansprüche 1 bis 15, **dadurch gekennzeichnet, daß** an wenigstens einem Endbereich (35) der Lippe ein Federabschnitt (20a, 20b) vorgesehen ist.

## Claims

1. Corrugated-tube connection for fixing a corrugated tube, with a retaining portion (10) with at least one lip (30, 32, 34, 35, 36) on a side of the retaining portion which faces the corrugated tube, a locking portion lying opposite the retaining portion in the closed state of the corrugated-tube connection, **characterised in that** the lip (30, 32, 34, 35, 36) on the retaining portion extends over more than 180° on the circumference of the corrugated tube, between two adjacent corrugations of the corrugated tube, the end portions of the lips being closer to one another in relation to an axis of symmetry (54) than those mutually opposite inner contours of the lip which are furthest apart.

2. Corrugated-tube connection according to Claim 1, **characterised in that** the lip extends symmetrically with respect to a cylinder axis extending in the longitudinal direction of a fixed corrugated tube, the lip extending over more than 90° in the circumferential direction of the corrugated tube, at least on one side.

3. Corrugated-tube connection according to either of Claims 1 and 2, **characterised in that** the lip extends over more than 190°, in particular more than 200°, e.g. over 210°, 220° or more, in the circumferential direction of the corrugated tube.

4. Corrugated-tube connection according to one of Claims 1 to 3, **characterised in that** the lip extends further inwards in the radial direction, at least in an additional area which lies beyond the 180° circumferential extent, than in the area of the 180° extent.

5. Corrugated-tube connection according to Claim 4, **characterised in that**, in the additional area (35), the lip (30, 32, 34, 35, 36) at least approximately follows or corresponds to or is smaller than the outer circumference of the corrugated tube in a corrugation trough.

6. Corrugated-tube connection according to one of Claims 1 to 4, **characterised in that** the lip has different heights in the radially inward direction.

7. Corrugated-tube connection according to one of Claims 1 to 6, **characterised in that** the inner partial radius or radius of the lip is at least essentially uniform at all points.

8. Corrugated-tube connection according to Claim 7, **characterised in that** the contour of the retaining portion (10) is at least approximately oval on the inner circumference, with the result that the outer shape of the lip is, in particular, oval adjoining a body (12a, 12b, 14) of the retaining portion.

9. Corrugated-tube connection according to one of Claims 1 to 8, **characterised in that** the retaining portion is made symmetrical about a plane (54) and the radial height of the lip, the height of which increases, is varied symmetrically on both sides of the plane.

10. Corrugated-tube connection according to Claim 9, **characterised in that** the height increases starting from the point of intersection of the plane of symmetry with the lip.

11. Corrugated-tube connection according to one of Claims 1 to 10, **characterised in that** the retaining element (10) has two legs (12a, 12b) with a connecting portion (14), which together form the body of the retaining element.

12. Corrugated-tube connection according to one of Claims 1 to 11, **characterised in that** the locking portion has at least one lip, which corresponds to the lip (30, 32, 34, 35, 36) on the retaining element or is offset relative to the latter by the axial extent of at least one corrugation of the corrugated tube.

13. Corrugated-tube connection according to one of Claims 1 to 10, **characterised in that** the retaining element can be latched to the locking portion by means of at least one latching portion (18a, 18b), the latching portion (18a, 18b) being provided on one leg (12a, 12b) or on each of the legs.

14. Corrugated-tube connection according to one of Claims 1 to 13, **characterised in that** the retaining portion (10) is held on the locking portion by means of a connecting portion, a film hinge, a connecting web or the like.

15. Corrugated-tube connection according to one of Claims 1 to 14, **characterised in that** the retaining portion (10) rests on or against the corrugated tube by means of its lip (30, 32, 34, 35, 36) in the region of the transition or intersection between the retaining portion and the locking portion.

16. Corrugated-tube connection according to one of Claims 1 to 15, **characterised in that** a spring portion (20a, 20b) is provided on at least one end region (35) of the lip.

## Revendications

1. Raccord de tube ondulé pour la fixation d'un tube ondulé, comportant une portion de blocage (10) avec au moins une lèvre (30, 32, 34, 35, 36) sur un côté de la portion de blocage, tourné vers le tube ondulé, une portion de verrouillage faisant face à la portion de blocage à l'état fermé du raccord de tube ondulé, **caractérisé en ce que** la lèvre (30, 32, 34, 35, 36) sur la portion de blocage s'étend sur plus de 180° sur la circonférence du tube ondulé entre deux ondulations voisines du tube ondulé, les portions terminales de la lèvre étant plus proches, par rapport à un axe de symétrie (54), que les contours intérieurs de la lèvre, les plus éloignés l'un de l'autre et qui se font face.

2. Raccord de tube ondulé selon la revendication 1, **caractérisé en ce que** la lèvre s'étend symétriquement par rapport à un axe de cylindre s'étendant dans la direction longitudinale d'un tube ondulé fixé, la lèvre s'étendant, au moins sur un côté, sur plus de 90° dans la direction périphérique du tube ondulé.

3. Raccord de tube ondulé selon l'une des revendications 1 ou 2, **caractérisé en ce que** la lèvre s'étend dans la direction périphérique du tube ondulé sur plus de 190°, en particulier sur plus de 200°, par exemple sur 210°, 220° ou plus.

4. Raccord de tube ondulé selon l'une des revendications 1 à 3, **caractérisé en ce que** la lèvre s'étend radialement plus loin vers l'intérieur, au moins dans une zone supplémentaire, qui se situe au delà de l'étendue périphérique de 180°, que dans la zone de l'étendue périphérique de 180°.

5. Raccord de tube ondulé selon la revendication 4, **caractérisé en ce que** dans la zone supplémentaire (35), la lèvre (30, 32, 34, 35, 36) suit au moins approximativement la circonférence extérieure du tube ondulé dans un creux d'ondulation, respectivement correspond à celui-ci ou est plus petite que celui-ci.

6. Raccord de tube ondulé selon l'une des revendications 1 à 4, **caractérisé en ce que** la lèvre s'étend radialement vers l'intérieur à des hauteurs différentes.

7. Raccord de tube ondulé selon l'une des revendications 1 à 6, **caractérisé en ce que** le rayon partiel intérieur ou le rayon de la lèvre est au moins sensiblement le même partout.

8. Raccord de tube ondulé selon la revendication 7, **caractérisé en ce que** le contour de la portion de blocage (10) sur la circonférence intérieure, est au moins approximativement ovale, ce qui fait qu'il en résulte en particulier une forme extérieure ovale de la lèvre à la limite avec un corps (12a, 12b, 14) de la portion de blocage.

9. Raccord de tube ondulé selon l'une des revendications 1 à 8, **caractérisé en ce que** la portion de blocage est réalisée symétrique autour d'un plan (54) et la lèvre qui devient plus haute varie symétriquement dans sa hauteur radiale, des deux côtés du plan.

10. Raccord de tube ondulé selon la revendication 9, **caractérisé en ce que** la hauteur augmente à partir du point d'intersection du plan de symétrie et de la lèvre.

11. Raccord de tube ondulé selon l'une des revendications 1 à 10, **caractérisé en ce que** l'élément de blocage (10) comporte deux branches (12a, 12b) avec une portion de liaison (14), lesquelles forment ensemble le corps de l'élément de blocage.

12. Raccord de tube ondulé selon l'une des revendications 1 à 11, **caractérisé en ce que** la portion de verrouillage possède au moins une lèvre qui correspond à la lèvre (30, 32, 34, 35, 36) sur l'élément de blocage, respectivement est décalée par rapport à celle-ci de l'étendue axiale d'au moins une ondulation de tube ondulé.

13. Raccord de tube ondulé selon l'une des revendications 1 à 10, **caractérisé en ce que** l'élément de blocage peut s'accrocher avec la portion de verrouillage, au moyen d'au moins une portion d'accrochage (18a, 18b), la portion d'accrochage (18a, 18b) étant prévue sur une branche (12a, 12b), respectivement sur chacune des branches.

14. Raccord de tube ondulé selon l'une des revendications 1 à 13, **caractérisé en ce que** la portion de blocage (10) est maintenue au moyen d'une portion de liaison, d'une charnière-film, d'une nervure barrette ou similaire sur la portion de verrouillage.

15. Raccord de tube ondulé selon l'une des revendications 1 à 14, **caractérisé en ce que** dans la zone de transition, respectivement de recoupement entre la portion de blocage et la portion de verrouillage, la portion de blocage (10) repose sur le tube ondulé, respectivement s'applique contre celui-ci, par sa lèvre (30, 32, 34, 35, 36).

16. Raccord de tube ondulé selon l'une des revendications 1 à 15, **caractérisé en ce qu'**il est prévu une portion élastique (20a, 20b) sur au moins une zone terminale (35) de la lèvre.
